# EUROPEAN PATENT APPLICATION

(11) **EP 2 169 388 A1**
(43) Date of publication of application: **31.03.2010**
(21) Application number: 09398008.4
(22) Date of filing: 25.09.2009
(51) Int. Cl.: G01N 21/95, G06T 7/00, G01N 33/38

(54) **Process and seat for digitalising elements that are characteristic of stone plates**

(30) Priority: 25.09.2008 PT 10418808
(71) Applicant: CEI-Companhia de Equipamentos Industriais, Lda., 3700-018 S. Joao da Madeira (PT)
(72) Inventor: Antunes da Silva, Agostinho Manuel, 3700-018 S. Joao da Madeira (PT)
(74) Representative: Costa Franca, Vitor Hugo

(57) **Abstract**

Process and seat for digitalising elements that are characteristic of stone plates by editing an image of the plate obtained by means of a digital video camera (5). Distortions of the image are corrected. Using the image, the outline of the plate and its defects are digitalised. The seams and shades are digitalised using the image reproduced on the computer screen (6) with the help of the cursor. The defects, seams and shades may be classified in accordance with a pre-established scale. The system automatically generates a bar code ticket with characteristics of the digitalised plate and located at the storage area.

## Description

This invention refers to a process for digitalising elements that are characteristic of plates of stone, ceramic and glass and a seat for their positioning.

The choice of plates, namely of stone, to be cut in accordance with pre-established drawings so as to optimise the use of the plates taking into account, on the one hand, their geometry, defects, seams and colouring and on the other hand the different geometries of the elements to be cut is an activity that has always been carried out manually. The inconveniences of this manual choice are many given the difficulties found in handling the plates so, usually, the activity of choice is carried out on site in the storage area with the plates standing vertically, with little space between one in relation to the other, only allowing for limited visual analysis.

The manual choice, due to the mentioned difficulties, does not allow for the characteristics of the plates to be fully known, namely:
- The exact limits of the outline of the plates;
- The defects, characterised by geometry, location and degree;
- The seams, characterised by geometry and location;
- The colourings of the plate through full vision.

This invention intends to obviate all these inconveniences by digitalisation of elements that are characteristic of the plates on a seat, at the entrance to the warehouse, being the set of data stored on bar code tickets for subsequent use in the automatic optimisation of the choice of plates in view of the elements to be cut and their geometry.

The invention consists in obtaining an image of the plate by a digital reading system comprising a digital video camera. The image obtained is edited, using a process that is described below, so that distortions may be corrected. Using this image, and taking into account the contrast between the plate and the seat, the outline is digitalised by a set of coordinate points at a determined distance from each other. Should the contrast not be sufficient, the photograph is stored and subsequent optimisation of the pieces is carried out by overlapping the geometry of the pieces on the photograph. When the defects have sufficient contrast, they are equally digitalised by geometric figures limited by an outline identified by a set of coordinate points. After the creation of this defect outline, the operator may scale this same defect by classifying it on a pre-established scale.

Should the contrast not be sufficient for automatically detecting a defect, the latter may be identified and digitalised point by point onto the photograph reproduced on the screen by using the cursor. The shades and seams may also be characterised on the photograph reproduced on the screen through the method described above.

The invention is described with the help of two figures together which, in a non-limitative way, represent:

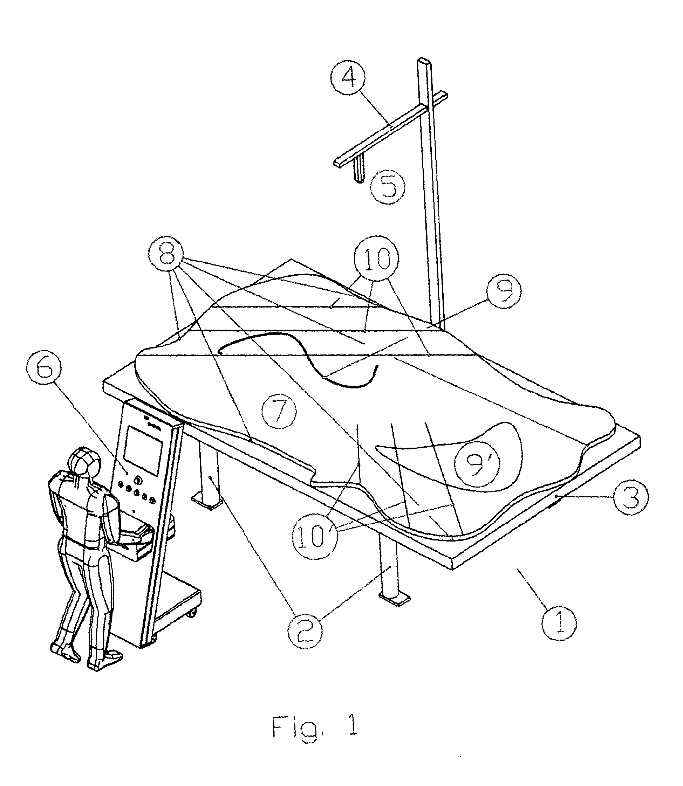

- Figure 1 - Perspective, in schematic form, of the seat for obtaining the image in accordance with the invention, and

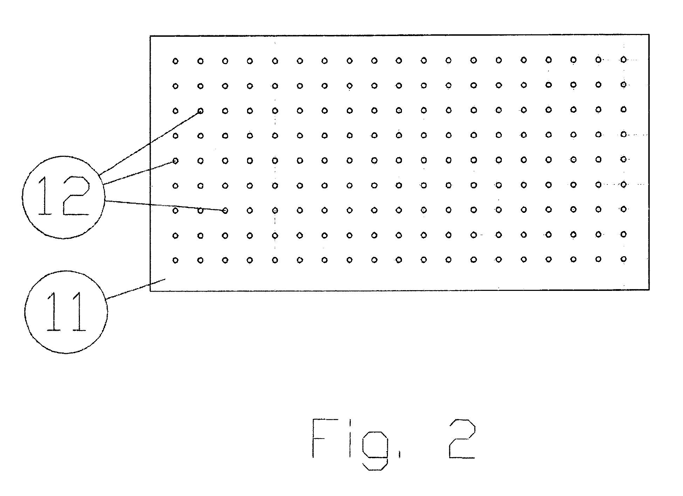

- Figure 2 - Schematic drawing of the plate matrix.

The seat (1) comprises some feet (2), a lid (3), a support, (4) on which is fixed a digital video camera (5), connected (not visible on the drawing) to a computer (6). On the lid (3) is the plate (7), with characteristics intended for digitalisation. This plate has an outline (8), defects (9) and (9') and seams (10) and (10').

From the digital video camera (5) an image of the plate is obtained and this is stored on the computer.

The image obtained usually has distortions caused by chromatic aberrations. The distortions of the lenses change the lines in or out of the outline due to chromatic and shadow diversions.

The degree of distortion depends on the quality of the lens and the focal distance used.

In generic terms, it may be said that the outwards distortion looks like straight lines that arch in the direction of the sides of the image while the inwards distortion shows the opposite, the straight lines arch inside. The aberrations also cause diversions which manifest themselves as coloured coronas on the edges of the images. This type of anomaly is due to the fact that the lenses are not able to focus on different colours from just one point. In addition, the chromatic diversion creates a coloured border on the edges of the image since the lens is not able to focus on different colours from just one point. Normally, there appears a red or a blue line spread over the outlines of the image. Finally, the aureole distortion leaves the extreme areas of the image darker than those at the centre.

The software developed, which is an integral part of the invention, comprises a set of algorithms that allow for correction of the dysfunctions referred to above as follows:
- Before the "reading" of the plates, so as to calibrate the focal distance and illumination of the camera, a plate matrix (11) is placed upon the seat (1). This plate matrix has known geometry and comprises perforations or points (12) of a different colour, of the same diameter, lined up and separated one from the other at the same distance;
- A photograph is taken of this plate matrix covering the work area which is edited by software comparing the image with the known geometry and a calibration matrix of the errors mentioned above is constructed.

The geometry of the outline of the image of the plate (7), obtained by digitalisation of the separating line between the seat and the lid, is corrected in accordance with the correlation between the image of the plate matrix and the known geometry of this plate matrix. At each point on the surface of the lid, the correction is the difference between the coordinates of this point, on the image of the plate matrix, and the known coordinates of the geometry of the plate matrix. The correction to be applied to any point of the image of the outline of the plate (7) with the same coordinates at any point of the image of the plate matrix is the value of the calibration matrix at this point.

Therefore, the digitalisation of the outline (8) of the plate (7) is obtained. Any defects on the plate with sufficient contrast (9) are digitalised by means of a similar process. Any defects that do not have sufficient contrast to be detected automatically are digitalised using the image of the plate (7) on the computer screen with the help of the cursor and of software for the technique. The operator may also classify the defects in accordance with a pre-established scale.

As previously mentioned, the seams (10) and (10') may also be digitalised from the image of the plate to be processed on the computer screen using the process described above. It is also possible to introduce data regarding the shades and texture of the plate.

At the end of the operation the system automatically generates a bar code ticket with the characteristics of the digitalised plate and its location at the storage area.

## Claims

1. - Process for digitalising characteristics of plates of stone, ceramic and glass **characterised by** there being the plate on the top (3) of a seat (1), and for obtaining an image of the plate using a digital video camera (5) connected to a computer, to identify the lines that define the outline of the plate or the outlines of the areas of defect on the plate through the contrast between, respectively, the plate and the lid or between areas with defect and the rest of the plate **and by** the distortions of the image of the outline being corrected by a matrix of calibration obtained by comparison between a plate matrix and its image.

2. - Process in accordance with claim 1, **characterised by** the part of the outline of the plate or of the outlines of the defects not identified by the contrast and the identification of the seams being digitalised point by point onto the photograph reproduced on the screen of the computer with the use of the cursor.

3. - Process in accordance with the previous claims, **characterised by** the types of defects and the shades of the plate being classified in accordance with pre-established scales and by this information being associated with the digital files formed in accordance with the previous claims.

4. - Seat for digitalising characteristics of plates of stone, ceramic and glass through the process in accordance with the previous claims, **characterised by** comprising some feet (2), a lid (3), a support, (4) on which is fixed a digital video camera (5), connected to a computer (6) and a printer which, at the end of the process, automatically generates a bar code ticket with the characteristics of the digitalised plate and its location at the storage area.
